# EUROPÄISCHE PATENTSCHRIFT

(11) **EP 0 665 081 B1**
(45) Veröffentlichungstag und Bekanntmachung des Hinweises auf die Patenterteilung: **23.12.1998**
(21) Anmeldenummer: 94117292.6
(22) Anmeldetag: 02.11.1994
(51) Int. Cl.: B23P 15/40

(54) **Verfahren zum Bearbeiten von aus einer Trägerunterlage fotochemisch herausgeätzten Stanzstegen**
Method of machining for a cutting die, photoeched from a carrier base
Procédé d'usinage d'une matrice de découpage, fabriquée par photogravure d'une base-podeur

(30) Priorität: 04.01.1994 DE 4400106
(43) Veröffentlichungstag der Anmeldung: 02.08.1995
(60) Teilanmeldung: 98110376.5
(73) Patentinhaber: GERHARDT INTERNATIONAL A/S, DK-2770 Kastrup (DK)
(72) Erfinder: Gerhardt, Jorgen, DK-2791 Dragor (DK)
(74) Vertreter: Bagger-Soerensen, Birgitte

(56) Entgegenhaltungen:
- EP-A- 0 321 590
- GB-A- 203 993
- GB-A- 2 066 162
- GB-A- 2 252 743
- US-A- 3 618 438
- US-A- 4 625 592

## Beschreibung

Die Erfindung betrifft ein Verfahren zum Bearbeiten von aus einer Trägerunterlage fotochemisch herausgeätzten Stanzstegen, mittels denen Etiketten aus auf einem Unterlagsband lösbar haftendem Etikettenmaterial durch Wälzen in einer Wälzrichtung der Stanzstege über das Etikettenmaterial zu stanzen sind, wobei die Trägerunterlage in Wälzrichtung und quer zur Wälzrichtung verlaufende Stanzstege aufweist.

Die Trägerunterlage kann der Körper einer Walze sein, aber auch ein hülsenförmig auf einer Walze befestigtes Blech.

Es hat sich erwiesen, daß nur fotochemisch herausgeätzte Stanzstege, da sie notwendigerweise verhältnismäßig breite obere Begrenzungsflächen haben, nicht ohne weiteres zum Herausstanzen von Etiketten geeignet sind.

Ein Verfahren der in der Einleitung erwähnten Art ist aus der EP-A-0 321 590 bekannt, die ein Verfahren zum Herstellen eines Stanzwerkzeugs mit scharfen Schneidkanten für Etikettenschneidgeräte betrifft. Um zu erreichen daß die Schneidkanten eine konstante Höhe aufweisen, wird ein Stanzkörper dort in einem ersten Verfahrensschritt durch Ätzen mit einem Grat versehen, der dann in einem zweiten Verfahrensschritt durch Hämmern und/oder spanabhebendes Schaben in eine scharfe Schneidkante umgewandelt wird, wobei der Stanzkörper auf einer horizontalen Arbeitsplatte aufgelegt ist.

Aufgabe der Erfindung ist es, ein Verfahren eingangs genannter Art anzugeben, das zu Stanzstegen hoher Lebensdauer mit präzisen Stanzeigenschaften führt.

Zur Lösung dieser Aufgabe ist das Verfahren dadurch gekennzeichnet, daß den Stanzstegen durch Fräsen mittels eines kegelstumpfförmigen, die Längsseiten der Stanzstege angreifenden, um seine Achse rotierenden Fräsers ein dreieckförmiger Querschnitt mit hohlkehlenförmigen Seiten gegeben wird, und daß die Höhe der in Wälzrichtung verlaufenden Stanzstege niedriger gefräst wird als die Höhe der quer zur Wälzrichtung verlaufenden Stanzstege.

Um eine weitere Präzisierung der Stanzstege zu erhalten, ist das Verfahren bevorzugt dadurch gekennzeichnet, daß die gefrästen Stanzstege mit einem Werkzeug von Hand nachgearbeitet werden.

Wie schon angeführt, ist die Trägerunterlage bevorzugt eine Walze oder ein auf einer Walze hülsenförmig zu befestigendes Blech.

Um die Stanzstege beim Stanzen in einem vorgegebenen Abstand von einer Stanzunterlage zu halten, so daß die Stanzstege möglichst nur das Etikettenmaterial durchstanzen, nicht aber deren Unterlagsband, ist das Verfahren bevorzugt dadurch gekennzeichnet, daß die Walze einen Mittelabschnitt aufweist, auf dem sich die Stanzstege befinden, und beidseitig in Abstand von dem Mittelabschnitt Abstützabschnitte aufweist, deren Radius um etwa die Dicke des Unterlagsbands - vorzugsweise um 0,08 bis 0,25 mm - größer als der Radius des Mittelabschnitts einschließlich der Stanzstege ist.

Die Lebensdauer der Walze bzw. des Blechs und deren Stanzpräzision wird dadurch erhöht, daß die Walze aus einer Stahl-Rohlingswalze gedreht wird, die vor dem Drehen wenigstens oberflächlich auf etwa 35 bis 45 HRC gehärtet wurde, oder daß die Walze aus einer Stahl-Rohlingswalze gedreht wird, die mach dem Drehen wenigstens oberflächlich auf etwa 35 bis 65 HRC gehärtet wird, oder daß das Blech aus einem Stahl besteht, der wenigstens oberflächlich auf 45 bis 55 HRC gehärtet ist.

Folgende Bemessungsangaben haben sich als besonders vorteilhaft erwiesen:

Die Breite der Füße der Stanzstege beträgt bevorzugt 0,5 bis 1,0 mm.

Die Höhe der Stanzstege ist bevorzugt etwas größer als die Dicke des Etikettenmaterials und beträgt bevorzugt 0,4 bis 1,0 mm.

Die Breite der oberen Begrenzungsflächen der fotochemisch herausgeätzten - also noch nicht durch Fräsen bearbeiteten - Stanzstege beträgt 0,1 bis 0,8 mm.

Eine Ausführungsform ist dadurch gekennzeichnet, daß die Höhe der in Wälzrichtung verlaufenden Stanzstege bis auf Endabschnitte dieser Stanzstege - vorzugsweise um 0,007 bis 0,011 mm - niedriger ist, als die Höhe der quer zur Wälzrichtung verlaufenden Stanzstege.

Im folgenden wird die Erfindung an Ausführungsbeispielen unter Hinweis auf die beigefügten Zeichnungen beschrieben.

Fig. 1 zeigt eine erste Ausführungsform einer Stanzwalze im Fertigzustand.

Fig. 2 zeigt einen Schnitt längs II-II in Fig. 1.

Fig. 3 zeigt eine zweite Ausführungsform einer Walze beim Umlegen und hülsenförmigen Biegen eines mit den Stanzstegen versehenen Blechs.

Fig. 4 zeigt einen Schnitt längs IV-IV in Fig. 3.

Fig. 5 zeigt eine Seitenansicht einer fertigen Stanzwalze nach Fig. 1 oder Fig. 3.

Die Fig. 6a bis 6d erläutern unterschiedliche Bearbeitungsschritte der Stanzstege.

Fig. 7 zeigt einen rechteckig geschlossenen Stanzsteg (grundsätzlich brauchen die Stanzstege nicht geschlossen zu sein).

Fig. 8 zeigt eine Fräsmaschine zum Fräsen eines noch ebenen, mit fotochemisch herausgeätzten Stanzstegen versehenen Blechs.

Fig. 9 zeigt eine Fräsmaschine zum Fräsen von fotochemisch aus einem Zylinderkörper oder aus einem um einen Zylinderkörper gebogenen Blech herausgeätzten Stanzstegen.

Fig. 10 zeigt schematisch eine Handbearbeitung der Stanzstege.

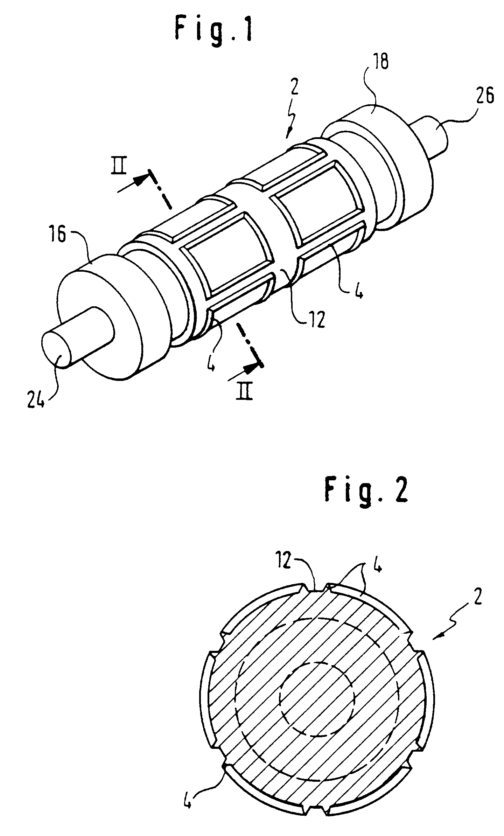

Die Fig. 1 und 2 zeigen eine Walze 2, aus deren Körper Stanzstege 4 fotochemisch herausgeätzt und anschließend durch Fräsen bearbeitet sind.

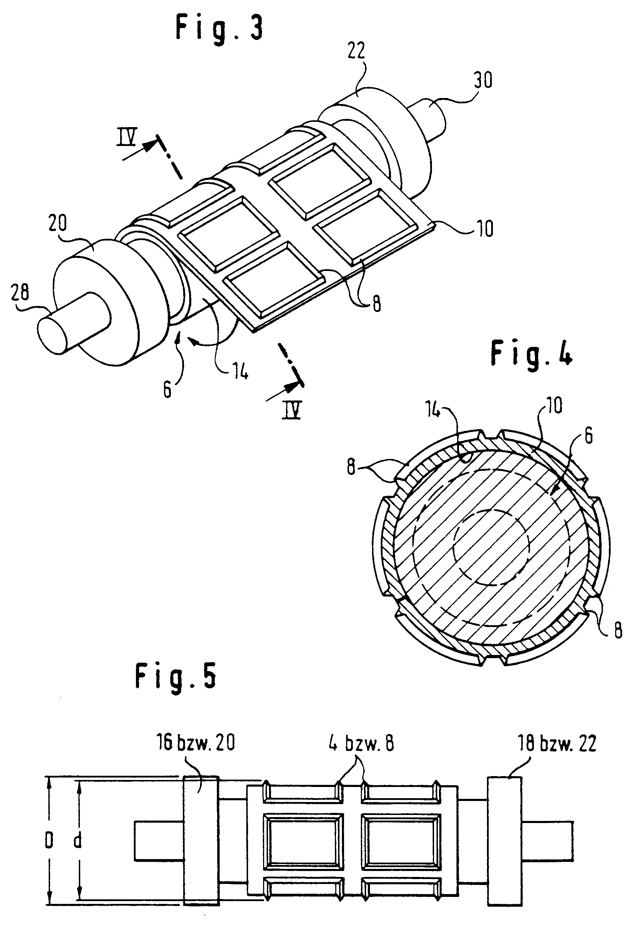

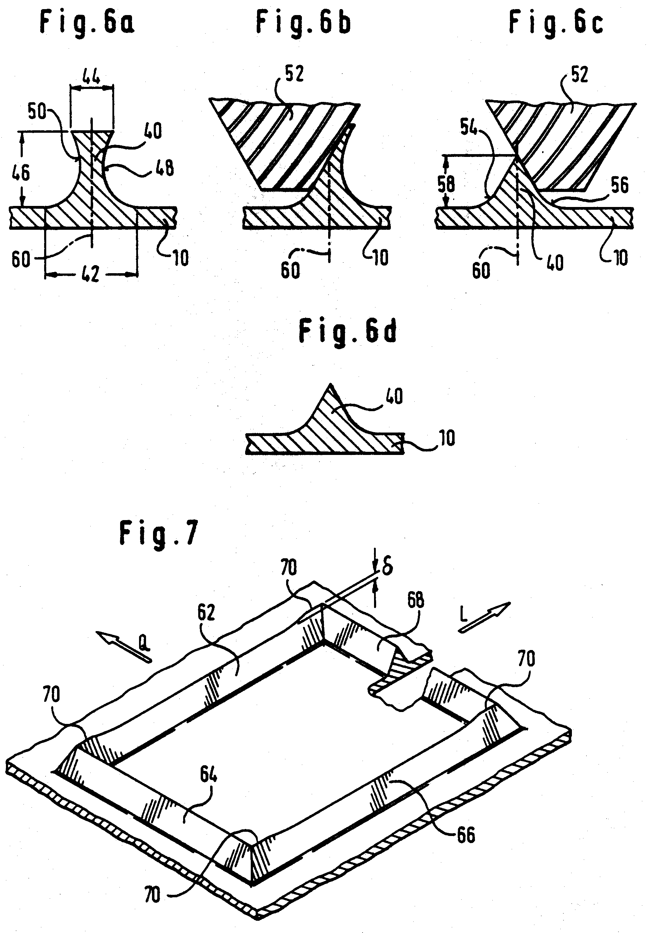

Die Figuren 3 und 4 zeigen eine Walze 6, um das ein mit fotochemisch herausgeätzten und anschließend gefrästen Stanzstegen 8 versehenes Blech 10 hülsenförmig herumgebogen ist. In beiden Fällen befinden sich die Stanzstege 4 auf einem Mittelabschnitt 12 bzw. 14 der Walze 2 bzw. 6, beidseitig von dem in Abstand Abstützabschnitte 16, 18 bzw. 20, 22 vorgesehen sind, deren Radius um etwa die Dicke des Unterlagsbands des Etikettenmaterials - vorzugsweise 0,8 bis 0,25 mm - größer als der Radius des Mittelabschnitts 12 bzw. 14 einschließlich der Stanzstege 4 bzw. 8 ist. Der erstgenannte Radius ist in Fig. 5 mit D, der letztgenannte Radius in Fig. 5 mit d bezeichnet. An die Abstützabschnitte 16, 18 bzw. 20, 22 schließen sich Lagerzapfen 24, 26 bzw. 28, 30 an. Die Walzen 2 bzw. 6 sind aus einer ursprünglich zylindrischen Stahl-Rohlingswalze, die wenigstens oberflächlich auf etwa 60 HRC gehärtet wurde, gedreht.

Fig. 6a zeigt einen Stanzsteg 40, wie er durch fotochemisches Ätzen entsteht. Die Breite seines Fußes 42 beträgt 0,5 bis 1,0 mm, die Breite seiner oberen Begrenzungsfläche 44 0,1 bis 0,8 mm, seine Höhe 46 (Ätztiefe) etwa 0,4 bis 1,0 mm. Seine Seitenflächen 48, 50 sind, wie dies beim Fotoätzen zwangsläufig ist, hohlkehlenförmig, da beim Fotoätzen die obere Begrenzungsfläche durch ein ätzfestes Material (Fotoresist) abgedeckt ist.

Mittels eines kegelstumpfförmigen, um seine Achse rotierenden Fräsers 52 werden nun die eine Seite und die andere Seite des fotochemisch herausgeätzten Stanzstegs gefräst.

Der Stanzsteg 40 erhält dadurch einen dreieckförmigen Querschnitt mit im Bereich seines Fußes 42 noch verbleibenden hohlkehlenförmigen Abschnitten 54, 56 der hohlkehlenförmigen Seitenflächen 48, 50. Die Höhe 58 des gefrästen Stanzstegs 40 hängt davon ab, wie weit der Fräser 52 in Richtung zur Mittellinie 60 der Stanzstege 40 bewegt wird. Diese Bewegung ist in die jeweils verwendete Werkzeugmaschine einzuprogrammieren. Fig. 6d zeigt einen fertig gefrästen Stanzsteg 40.

Fig. 7 zeigt zu einem Rechteck geschlossene Stanzstege 62, 64, 66, 68. Die in Wälzrichtung (Drehrichtung) der Walzen 2 bzw. 6 verlaufenden Stanzstege 62, 66 sind über den größten Teil ihrer Länge (bis auf ihre Endabschnitte 70) bevorzugt um 0,007 bis 0,011 mm niedriger als die Höhe der quer zur Wälzrichtung verlaufenden Stanzstege 64, 68. Der Höhenunterschied ist mit δ gekennzeichnet. Solche Höhenunterschiede sind ebenfalls durch entsprechendes Programmieren der jeweils verwendeten Werkzeugmaschinen zu erreichen.

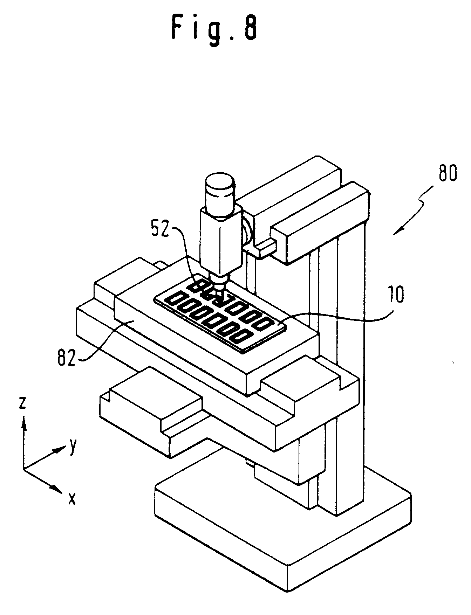

Fig. 8 zeigt schematisch eine Werkzeugmaschine 80 mit einem Schlitten 82, der relativ zu einem Fräser 52 auf und ab, nach links und rechts und nach vorne und hinten (Koordinatenrichtung x, y und z) bewegt werden kann. Auf dem Schlitten befindet sich ein noch ebenes Blech 10, aus dem fotochemisch Stanzstege herausgeätzt sind und nunmehr mit dem Fräser 52 in der beschriebenen Weise bearbeitet werden.

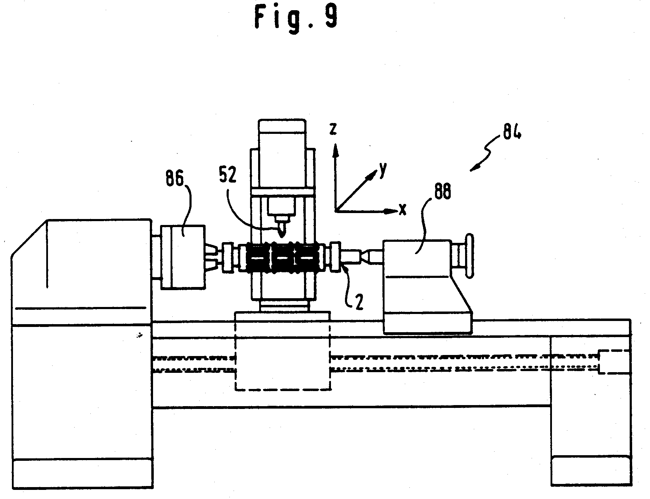

Fig. 9 zeigt in Seitenansicht eine Werkzeugmaschine 84, in die eine Walze 2, gegebenenfalls mit einem um sie gebogenen Blech, zwischen einer Arbeitsspindel 86 und einem Reitstock 88 eingespannt ist. Die Arbeitsspindel 86 wird beim Fräsen programmiert gedreht. Der Fräser 52 ist auf und ab, nach links und rechts, vor und zurück programmiert bewegbar (Koordinatenrichtung x, y und z).

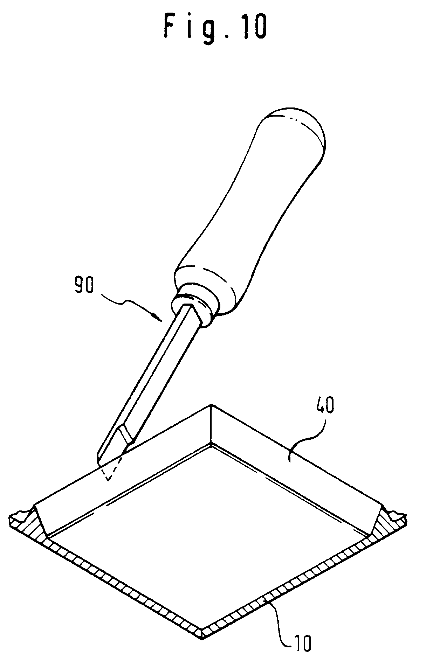

Fig. 10 zeigt einen Schaber 90, mit dem ein gefräster Stanzsteg von Hand nachbearbeitet wird.

## Patentansprüche

1. Verfahren zum Bearbeiten von aus einer Trägerunterlage (2; 10) fotochemisch herausgeätzen Stanzstegen (4; 8; 40; 62, 64, 66, 68), mittels denen Etiketten aus auf einem Unterlagsband lösbar haftendem Etikettenmaterial durch Wälzen in einer Wälzrichtung der Stanzstege (4; 8; 40; 62, 64, 66, 68) über das Etikettenmaterial zu stanzen sind, wobei die Trägerunterlage (2; 10) in Wälzrichtung und quer zur Wälzrichtung verlaufende Stanzstege (4; 8; 40; 62, 64, 66, 68) aufweist,
**dadurch gekennzeichnet,**
daß den Stanzstegen (4; 8; 40; 62, 64, 66, 68) durch Fräsen mittels eines kegelstumpfförmigen, die Längsseiten der Stanzstege (4; 8; 40; 62, 64, 66, 68) angreifenden, um seine Achse rotierenden Fräsers (52) ein dreieckförmiger Querschnitt mit hohlkehlenförmigen Seiten (54, 56) gegeben wird, und daß die Höhe der in Wälzrichtung (L) verlaufenden Stanzstege (62, 66) niedriger gefräst wird als die Höhe der quer zur Wälzrichtung (Q) verlaufenden Stanzstege (64, 68).

2. Verfahren nach Anspruch 1, **dadurch gekennzeichnet,**
daß die gefrästen Stanzstege (4; 8; 40; 62, 64, 66, 68) mit einem Werkzeug (90) von Hand nachgearbeitet werden.

3. Verfahren nach Anspruch 1 oder 2, **dadurch gekennzeichnet,** daß die Trägerunterlage (2; 10) eine Walze (2) oder ein auf einer Walze (6) hülsenförmig zu befestigendes Blech (10) ist.

4. Verfahren nach Anspruch 3, **dadurch gekennzeichnet,** daß die Walze (2; 6) einen Mittelabschnitt (12; 14) aufweist, auf dem sich die Stanzstege (4; 8; 40; 62, 64, 66, 68) befinden und beidseitig in Abstand von dem Mittelabschnitt (12; 14) Abstützabschnitte (16, 18; 20, 22) aufweist, deren Radius (D) um etwa die Dicke des Unterlagsbands - vorzugsweise um 0,08 bis 0,25 mm - größer als der Radius (d) des Mittelabschnitts (12; 14) einschließlich der Stanzstege (4; 8; 40; 62, 64, 66, 68) ist.

5. Verfahren nach Anspruch 3 oder 4, **dadurch gekennzeichnet,** daß die Walze (2; 6) aus einer Stahl-Rohlingswalze gedreht wird, die vor dem Drehen wenigstens oberflächlich auf etwa 35 bis 45 HRC gehärtet wurde.

6. Verfahren nach Anspruch 3 oder 4, **dadurch gekennzeichnet,** daß die Walze (2; 6) aus einer Stahl-Rohlingswalze gedreht wird, die nach dem Drehen wenigstens oberflächlich auf etwa 35 bis 65 HRC gehärtet wird.

7. Verfahren nach Anspruch 3 oder 4, **dadurch gekennzeichnet,** daß das Blech (10) aus einem Stahl besteht, der wenigstens oberflächlich auf 45 bis 55 HRC gehärtet ist.

8. Verfahren nach einem der vorstehenden Ansprüche, **dadurch gekennzeichnet,** daß die Breite (42) der Füße der Stanzstege (4; 8; 40; 62, 64, 66, 68) 0,5 bis 1,0 mm beträgt.

9. Verfahren nach einem der vorstehenden Ansprüche, **dadurch gekennzeichnet,** daß die Höhe (46) der Stanzstege (4; 8; 40; 62, 64, 66, 68) etwas größer als die Dicke des Etikettenmaterials ist, vorzugsweise 0,4 bis 1,0 mm beträgt.

10. Verfahren nach einem der vorstehenden Ansprüche, **dadurch gekennzeichnet,** daß die Breite (44) der oberen Begrenzungsflächen der fotochemisch herausgeätzten Stanzstege (4; 8; 40; 62, 64, 66, 68) 0,1 bis 0,8 mm beträgt.

11. Verfahren nach einem der vorstehenden Ansprüche, **dadurch gekennzeichnet,** daß die Stanzstege zu einem Rechteck geschlossen sind und daß die Höhe der in Wälzrichtung (L) verlaufenden Stanzstege (62, 66) bis auf Endabschnitte (70) dieser Stanzstege (62, 66) - vorzugsweise um 0,007 bis 0,011 mm - niedriger ist als die Höhe der quer zur Wälzrichtung (Q) verlaufenden Stanzstege (64, 68).

## Claims

1. A process for the machining of cutting edges (4; 8; 40; 62, 64, 66, 68), photochemically etched out of a carrier base (2; 10), by which labels are cut from a label material releasably adhering to a supporting web as a result of the rolling of the cutting edges (4; 8; 40; 62, 64, 66, 68) in a rolling direction over the label material, the carrier base (2; 10) being provided with cutting edges (4; 8; 40; 62, 64, 66, 68) extending in the rolling direction and transversely to the rolling direction, **characterized** in that the cutting edges (4; 8; 40; 62, 64, 66, 68) are given a triangular cross-section with fluted sides by milling by means of a frustoconical milling cutter (52) engaging the longitudinal sides of the cutting edges (4; 8; 40; 62, 64, 66, 68) and rotating about its axis, and that the cutting edges (62, 66) extending in the rolling direction (L) is milled to a smaller height than the height of the cutting edges (64, 68) extending transversely to the rolling direction (Q).

2. A process according to claim 1, **characterized** in that the milled cutting edges (4; 8; 40; 62, 64, 66, 68) are hand finished with a tool (90).

3. A process according to claim 1 or 2, **characterized** in that the carrier base (2; 10) is a roller (2) or a metal sheet (10) which can be fastened in the form of a sleeve on a roller (6).

4. A process according to claim 3, **characterized** in that the roller (2; 6) has a middle portion (12; 14), on which the cutting edges (4; 8; 40; 62, 64, 66, 68) are located, and on both sides at a distance from the middle portion (12; 14) supporting portions (16, 18; 20, 22), the radius (D) of which is larger than the radius (d) of the middle portion by approximately the thickness of the supporting web preferably from 0.08 to 0.25 mm.

5. A process according to claim 3 or 4, **characterized** in that the roller (2; 6) is lathe-turned from a steel blank roller, which prior to the lathe-turning at least superficially is hardened to appproximately 35 to 45 HRC.

6. A process according to claim 3 or 4, **characterized** in that the roller (2; 6) is lathe-turned from a steel blank roller, which after the lathe-turning at least superficially is hardened to appproximately 35 to 65 HRC.

7. A process according to claim 3 or 4, **characterized** in that the metal sheet (10) is made from steel which at least superficially is hardened to 45 to 55 HRC.

8. A process according to any of the preceding claims, **characterized** in that the width (42) of the base of the cutting edges (4; 8; 40; 62, 64, 66, 68) is 0.5 to 1.0 mm.

9. A process according to any of the preceding claims, **characterized** in that the height (46) of the cutting edges (4; 8; 40; 62, 64, 66, 68) is somewhat larger than the thickness of the label material, and preferably from 0.4 to 1.0 mm.

10. A process according to any of the preceding claims, **characterized** in that the width (44) of the top of the photochemically etched cutting edges (4; 8; 40; 62, 64, 66, 68) is from 0.1 to 0.8 mm.

11. A process according to any of the preceding claims, **characterized** in that the cutting edges connect to form a rectangle and that the height of the cutting edges (62, 66) extending in the rolling direction (L) to the end portions (70) of said cutting edges (62, 66) is smaller, preferably by about 0.07 to 0.011 mm, than the height of the cutting edges (64, 68) extending transversely to the rolling direction (Q).

## Revendications

1. Procédé d'usinage d'arêtes de découpage (4; 8; 40; 62, 64, 66, 68) obtenues par photogravure d'un support (2; 10) et à l'aide desquelles des étiquettes sont à découper dans un matériau adhérant de façon amovible à une bande de support, par cylindrage, selon un sens de cylindrage, des arêtes de découpage (4; 8; 40; 62, 64, 66, 68) dans le matériau adhérant, le support (2; 10) présentant ainsi des arêtes de découpage (4; 8; 40; 62, 64, 66, 68) qui s'étendent selon ledit sens de cylindrage et transversalement à celui-ci,
caractérisé
en ce que les arêtes de découpage (4; 8; 40; 62, 64, 66, 68) sont conformées par fraisage à l'aide d'une fraise tronconique (52), rotative autour de son axe, d'attaque des arêtes de découpage (4; 8; 40; 62, 64, 66, 68) selon leur longueur, pour leur donner une section triangulaire à faces latérales coniques creuses (54, 56), et en ce que la hauteur des arêtes de découpage (62, 66) qui s'étendent selon le sens de cylindrage (L) est réduite par fraisage, de même que la hauteur des arêtes de découpage (64, 68) qui s'étendent transversalement (Q) au sens de cylindrage.

2. Procédé selon la revendication 1, caractérisé en ce que les arêtes de découpage fraisées (4; 8; 40, 62, 64, 66, 68) sont reprises manuellement à l'aide d'un outil (90).

3. Procédé selon les revendications 1 ou 2, caractérisé en ce que le support (2; 10) est constitué par un cylindre (2) ou par une tôle (10) formant enveloppe à rapporter sur un cylindre (6).

4. Procédé selon la revendication 3, caractérisé en ce que le cylindre (2; 6) comporte une section centrale (12; 14) sur laquelle les arêtes de découpage (4; 8; 40; 62, 64, 66, 68) sont situées, et des deux cotés et à distance de la section centrale (12; 14), des sections de support (16, 18; 20, 22), dont le rayon (D) est plus grand, sensiblement de l'épaisseur de la bande support - de préférence environ 0,08 à 0,25 mm - que le rayon (d) de la section centrale (12; 14) dans la zone des arêtes de découpage (4; 8; 40; 62, 64, 66, 68).

5. Procédé selon les revendications 3 ou 4, caractérisé en ce que le cylindre (2; 6) est façonné au tour à partir d'un cylindre brut en acier qui, avant façonnage au tour, est trempé, au moins en surface, pour obtenir une dureté d'environ 35 à 65 HRC.

6. Procédé selon les revendications 3 ou 4, caractérisé en ce que le cylindre (2; 6) est façonné au tour à partir d'un cylindre brut en acier qui, après façonnage au tour, est trempé, au moins en surface, pour obtenir une dureté d'environ 35 à 65 HRC.

7. Procédé selon les revendications 3 ou 4, caractérisé en ce que la tôle (10) est en acier qui, au moins en surface, est trempé pour obtenir une dureté d'environ 45 à 55 HRC.

8. Procédé selon l'une des revendications précédentes, caractérisé en ce que le pied des arêtes de découpage (4; 8; 40, 62, 64, 66, 69) présente une largeur (42) de 0,5 à 1,0 mm.

9. Procédé selon l'une des revendications précédentes, caractérisé en ce que la hauteur (46) des arêtes de découpage (4; 8; 40; 62, 64, 66, 68) est un peu plus grande, de préférence de 0,4 à 1,0 mm, que l'épaisseur du matériau pour étiquettes.

10. Procédé selon l'une des revendications précédentes, caractérisé en ce que la largeur (44) de la face supérieure de délimitation des arêtes de découpage (4; 8, 40; 62, 64, 66, 68) obtenues par photogravure est de 0,1 à 0,8 mm.

11. Procédé selon l'une des revendications précédentes, caractérisé en ce que les arêtes de découpage sont refermées en quadrilatère et en ce que la hauteur des arêtes de découpage (62, 66) qui s'étendent dans le sens de cylindrage (L), et ceci jusqu'à une section terminale (70) de ces arêtes de découpage (62, 66), est de préférence de 0,007 à 0,011 mm plus faible que la hauteur des arêtes de découpage (64, 68) qui s'étendent transversalement (Q) au sens de cylindrage.
